# EUROPÄISCHE PATENTSCHRIFT

(11) **EP 1 300 282 B1**
(45) Veröffentlichungstag und Bekanntmachung des Hinweises auf die Patenterteilung: **24.01.2007**
(21) Anmeldenummer: 02019518.6
(22) Anmeldetag: 31.08.2002
(51) Int. Cl.: B60N 3/10

(54) **Vorrichtung zur Halterung von Getränkedosen oder dgl. Behältnissen im Innenraum von Fahrzeugen**
Device for holding beverage cans or similar containers in the passenger compartment of vehicles
Dispositif pour le maintien de canettes à boisson ou conteneurs similaires dans l'habitacle de véhicules

(30) Priorität: 06.10.2001 DE 10149402
(43) Veröffentlichungstag der Anmeldung: 09.04.2003
(73) Patentinhaber: Dr.Ing. h.c.F. Porsche Aktiengesellschaft, 70435 Stuttgart (DE)
(72) Erfinder: Zierle, Matthias, 70794 Filerstadt (DE); Frank, Martin, 75417 Mühlacker (DE)

(56) Entgegenhaltungen:
- DE-A- 4 302 948
- DE-A- 10 060 926
- DE-A- 19 534 435
- DE-A- 19 717 011
- DE-A- 19 908 130

## Beschreibung

Die Erfindung bezieht sich auf ein Handschuhfach für ein Armaturenbrett eines Fahrzeuges nach dem Oberbegriff des Anspruchs 1.

Aus der DE 43 02 948 A1 ist es bekannt, innerhalb und zwar im oberen Bereich eines Handschuhfaches eine Vorrichtung zur Halterung von Getränkedosen oder dgl. Behältnissen anzuordnen, wobei die Vorrichtung wenigstens ein Aufnahmeteil für zumindest eine Getränkedose ist. Das Aufnahmeteil ist an einem Schlitten abgestützt, der mit einem innerhalb des Handschuhfaches angeordneten Führungsteil zusammenwirkt. In eingefahrener Ruhelage der Vorrichtung werden diese und das Handschuhfach durch einen einstückigen Handschuhkastendeckel abgedeckt. Dieser Anordnung haftet der Nachteil an, dass die Vorrichtung einen relativ aufwendigen Aufbau aufweist und dass vor dem Verlagern des Aufnahmeteiles der Vorrichtung in die Gebrauchslage stets der relativ große Handschuhkastendeckel geöffnet werden muss. Hierdurch wird die Beinfreiheit für den Beifahrer eingeschränkt und der ästhetische Gesamteindruck des Fahrzeuginnenraums wird beeinträchtigt. Durch die lineare schubladenartige Ausfahrbewegung würde das Aufnahmeteil der Vorrichtung in der Gebrauchslage zudem im Entfaltungsbereich eines im Armaturenbrett angeordneten Beifahrerairbags liegen.

Aus der DE 199 08 130 A1 geht eine Schalttafel für ein Fahrzeug hervor, wobei an der Schalttafel beifahrerseitig ein multifunktion ausgebildetes ausziehbares Tablett vorgesehen ist, das beispielsweise als Getränkehalter nutzbar ist. Dieses Tablett ist außerhalb des Handschuhfaches angeordnet und zwar oberhalb des Handschuhfaches.

Aufgabe der Erfindung ist es, ein Handschuhfach der eingangs genannten Gattung so weiterzubilden, und dass zum Herausverlagern des Aufnahmeteiles der Handschuhkastendeckel nicht geöffnet werden muss.

Diese Aufgabe wird durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung einer separaten Klappe vor der Vorrichtung auf das Öffnen des Handschuhkastendeckels beim Verlagern der Vorrichtung in die Gebrauchslage verzichtet werden kann.

Die eine geringe Bauhöhe aufweisende Klappe ragt auch in ihrer Offenstellung nicht in den Beinraum eines Fahrzeuginsassen hinein und wirkt optisch nicht störend. Die lediglich aus einem Gehäuse, einer Klappe und zumindest einem schwenkbar gelagerten Aufnahmeteil bestehende Vorrichtung weist einen einfachen Aufbau auf und ist kostengünstig herstellbar. Durch geschickte Wahl der Drehachse und die gebogene Form des Aufnahmeteils wird zudem sichergestellt, daß auch in der Gebrauchslage des Aufnahmeteils bzw. der Aufnahmeteile der Entfaltungsbereich des Beifahrerairbags erhalten bleibt. Ein mögliches Ausführungsbeispiel der Erfindung wird anhand von Zeichnungen nachfolgend näher erläutert:

Es zeigt:
- Fig. 1: eine perspektivische Ansicht von schräg vorne auf ein Armaturenbrett mit einem Handschuhfach und einer Vorrichtung zur Aufnahme von Getränkedosen in der eingefahrenen Ruhelage,
- Fig. 2: eine Teilansicht von vorne auf den beifahrerseitigen Teilbereich eines Armaturenbretts mit einer Vorrichtung zur Aufnahme von Getränkedosen, wobei die Aufnahmeteile ihre Gebrauchslage einnehmen,
- Fig. 3: eine Draufsicht auf die Vorrichtung, wobei die Aufnahmeteile in Gebrauchslage dargestellt sind,
- Fig. 4: einen Schnitt nach der Linie IV-IV der Fig. 1, wobei die Vorrichtung in der verdeckten Ruhelage und der Handschuhkastendeckel einmal in Schließstellung und strichpunktiert in Offenstellung gezeichnet sind.

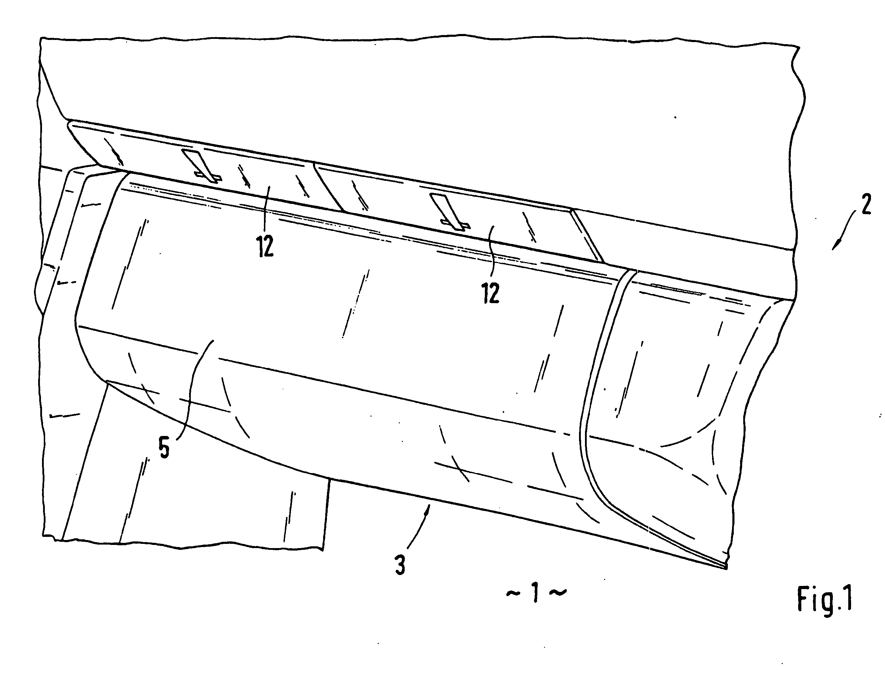

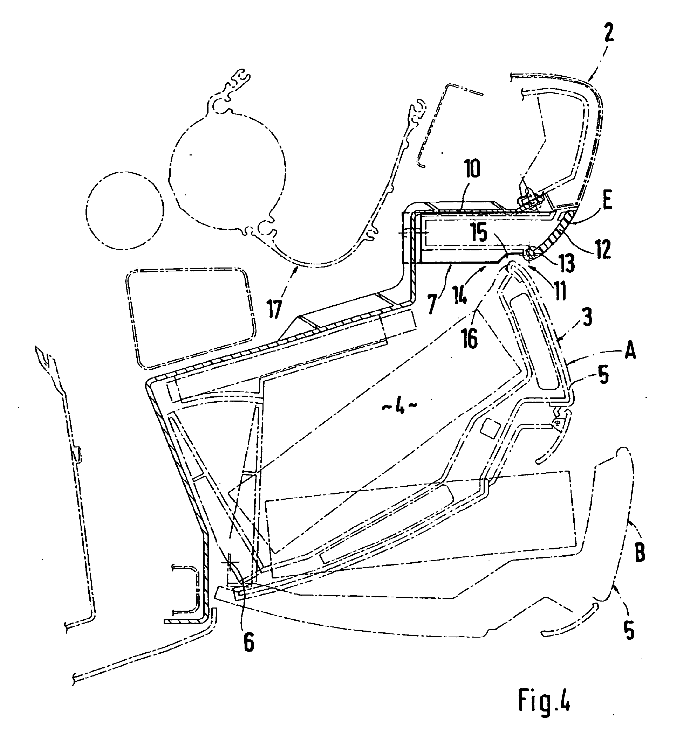

In Fig. 1 ist ein im Innenraum 1 eines Fahrzeuges angeordnetes Armaturenbrett 2 gezeigt, das beifahrerseitig ein Handschuhfach 3 aufweist. Das Handschuhfach 3 ist beispielsweise aus Kunststoff gefertigt und umschließt gemäß Fig. 4 einen Stauraum 4, der durch einen Handschuhkastendeckel 5 an der Vorderseite des Handschuhfaches 3 zugänglich ist.

Der Handschuhkastendeckel 5 ist in einem untenliegenden Bereich um eine querverlaufende, etwa horizontal ausgerichtete Drehachse 6 schwenkbar und von einer Schließstellung A nach unten in eine Offenstellung B verlagerbar und umgekehrt.

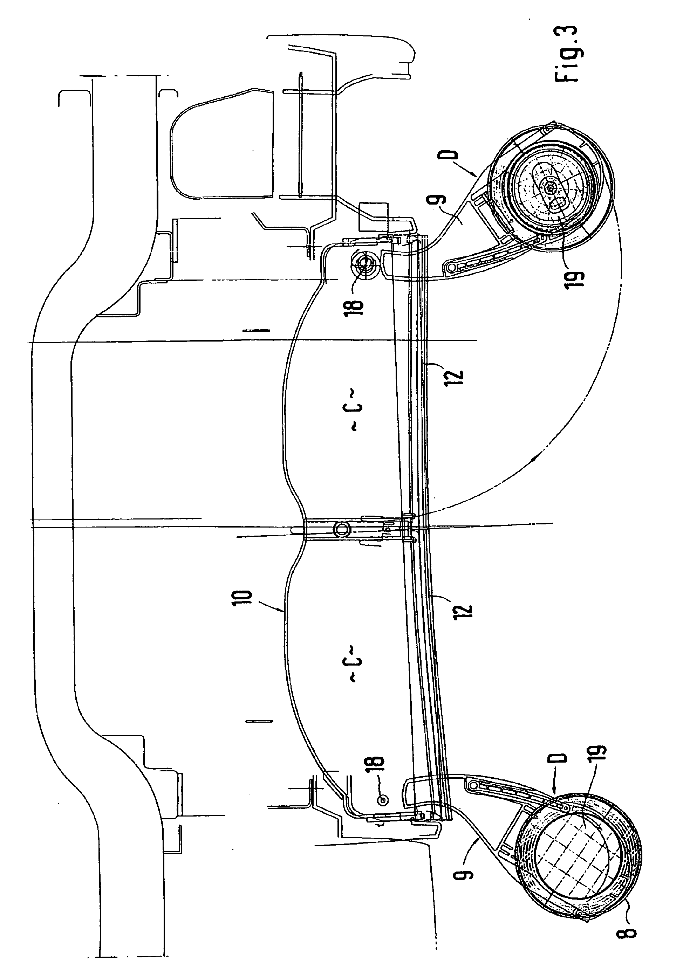

Innerhalb des Handschuhfaches 3 und zwar in einem oberen Bereich desselben ist eine Vorrichtung 7 zur Halterung von Getränkedosen 8 oder dergleichen Behältnissen angeordnet, die wenigstens ein Aufnahmeteil 9 für zumindest eine Getränkedose 8 aufweist. Das Aufnahmeteil 9 ist von einer nicht näher dargestellten verdeckten Ruhelage C innerhalb des Handschuhfachs 3 bzw. eines Gehäuses 10 der Vorrichtung 7 in eine vor dem Armaturenbrett 2 sich befindliche Gebrauchslage D verlagerbar und umgekehrt (Fig. 3).

Das Handschuhfach 3 weist im Bereich der Vorrichtung 7 eine geringere Bautiefe in Fahrzeuglängsrichtung auf als in einem darunterliegenden Bereich des Stauraumes 4.

Erfindungsgemäß erstreckt sich der an seiner Unterseite schwenkbar angelenkte Handschuhkastendeckel 5 lediglich bis etwa zum unteren Rand 11 der Vorrichtung 7 und die Vorrichtung 7 weist wenigstens eine separate, getrennt vom Handschuhkastendeckel 5 betätigbare Klappe 12 auf.

Die Klappe 12 ist vorzugsweise an ihrem untenliegenden Ende um eine querverlaufende, etwa horizontal ausgerichtete Drehachse 13 am Gehäuse 10 der Vorrichtung 7 schwenkbar gelagert und von einer geschlossenen Stellung E in eine nach unten geklappte geöffnete Stellung bewegbar und umgekehrt (Fig. 4).

Gemäß Fig. 4 weist die Klappe 12 - in Höhenrichtung gesehen - eine relativ geringe Bauhöhe im Vergleich zum Handschuhkastendeckel 5 auf und bildet quasi eine schmale querverlaufende Zierleiste innerhalb des Armaturenbretts 2, die farblich und von der Narbung her vom darüber- bzw. darunterliegenden Bereich des Armaturenbretts 2 abgesetzt sein kann (Fig. 1).

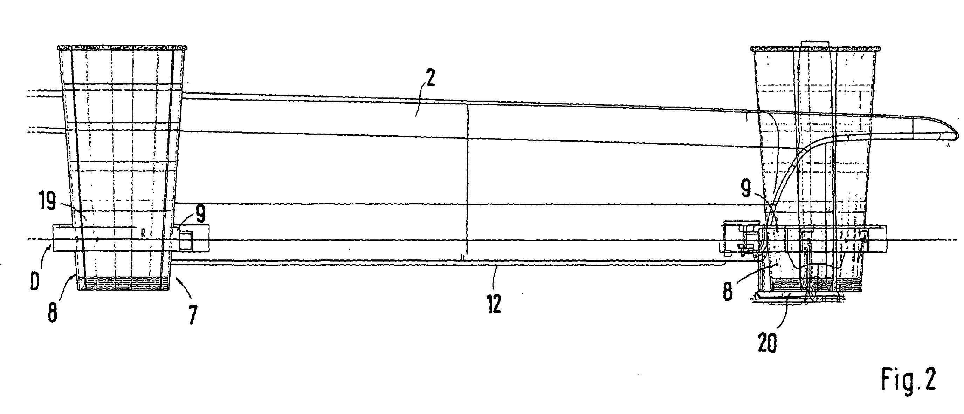

Im Ausführungsbeispiel umfaßt die Vorrichtung 7 gemäß den Fig. 1 und 2 zwei getrennte Aufnahmeteile 9 vor dem Beifahrersitz, wobei beide Aufnahmeteile 9 in einem gemeinsamen Gehäuse 10 oder in zwei getrennten Gehäusen 10 angeordnet sein können. Beiden Aufnahmeteilen 9 ist entweder eine gemeinsame Klappe 12 zugeordnet oder jedes Aufnahmeteil 9 wirkt mit einer eigenen Klappe 12 zusammen, d.h., bei der zuletzt genannten Variante sind zwei nebeneinanderliegende Klappen 12 vorgesehen (Fig. 1).

Das Gehäuse 10 der Vorrichtung 7 weist an der Unterseite 14 und zwar benachbart der Drehachse 13 eine nach oben ragende profilierte Ausformung 15 auf, in die ein oberer Rand 16 des Handschuhkastendeckels 5 in seiner Schließstellung A bereichsweise hineinragt. Oberhalb des Handschuhfachs 3 ist innerhalb des Armaturenbretts 2 ein schematisch angedeutetes Beifahrerairbagmodul 17 vorgesehen.

Damit der Entfaltungsbereich des Beifahrerairbags auch in Gebrauchslage D der Vorrichtung 7 sichergestellt ist, sind beide Aufnahmeteile 9 jeweils um eine seitlich außenliegende, etwa vertikal verlaufende Drehachse 18 am Gehäuse 10 gelagert. Zusammen mit der - in der Draufsicht gesehen - bogenförmigen nach außen gerichteten Kontur der Aufnahmeteile 9 wird sichergestellt, daß sich beide Aufnahmeteile 9 in der Gebrauchslage D seitlich außerhalb des möglichen Entfaltungsbereiches des Beifahrerairbags befinden (s. Fig. 3).

Jedes Aufnahmeteil 9 weist an seiner Oberseite wenigstens eine kreisrunde Öffnung 19 zur Einführung der Getränkedose 8 auf. Ferner weist das Aufnahmeteil 9 eine untere Aufstellfläche 20 für die Getränkedose 8 auf, wobei die untere Aufstellfläche 20 starr oder nach unten ausklappbar ausgebildet ist. Vorzugsweise sind beide Aufnahmeteile 9 federbeaufschlagt ausgebildet, d.h., nach Öffnen der Klappe 12 schwenken die Aufnahmeteile 9 selbsttätig von der Ruhelage C in ihre Gebrauchslage D. Die Aufnahmeteile 9 sind in ihrer ausgeschwenkten Gebrauchslage D durch eine nicht näher dargestellte Einrichtung arretiert (z.B. durch eine Kugelraste oder dgl.). Das Zurückführen der Aufnahmeteile 9 in die verdeckte Ruhelage C kann entweder manuell oder automatisch erfolgen.

Das Armaturenbrett 2 kann ein- oder mehrteilig aufgebaut sein. Im Ausführungsbeispiel setzt sich das Armaturenbrett 2 aus einem Schalttafelunterteil und einem Schalttafeloberteil zusammen, wobei die Vorrichtung 10 am Schalttafeloberteil befestigt ist.

Im Bereich der kreisunden Öffnung 19 jedes Aufnahmeteils 9 kann eine nicht näher dargestellte Einrichtung vorgesehen sein, welche es ermöglicht, Getränkedosen 8 mit unterschiedlichen Durchmessern aufzunehmen (Anpassung an unterschiedliche Getränkedosen). Durch einen leichten Druck von außen auf die Klappe 12 wird diese geöffnet und es erfolgt anschließend ein selbsttätiges Ausfahren des zumindest einen Aufnahmeteils 9 in die ausgeschwenkte Gebrauchslage D.

Die Vorrichtung zur Halterung von Getränkedosen oder dgl. Behältnisses kann als Gleichteil sowohl für Linkslenker- als auch für Rechtslenker-Fahrzeuge verwendet werden.

## Patentansprüche

1. Handschuhfach (3) für ein Armaturenbrett (2) eines Fahrzeuges mit einer im oberen Bereich des Handschuhfaches (3) angeordneten Vorrichtung (7) zur Halterung von Getränkedosen (8) oder ähnlichen Behältnissen, wobei dem Handschuhfach (3) ein schwenkbar gelagerter Handschuhkastendeckel (5) zugeordnet ist und die Vorrichtung (7) wenigstens ein Aufnahmeteil (9) für zumindest eine Getränkedose (8) umfasst, wobei das Aufnahmeteil (9) von einer verdeckten Ruhelage (C) innerhalb des Handschuhfaches(3) in eine Gebrauchslage (D) vor dem Armaturenbrett (2) verlagerbar ist, **dadurch gekennzeichnet, dass** sich der Handschuhkastendeckel (5) lediglich bis etwa zum unteren Rand (11) der Vorrichtung (7) erstreckt und daß die Vorrichtung (7) wenigstens eine separate, eine geringe Bauhöhe aufweisende Klappe (12) umfaßt, die getrennt vom Handschuhkastendeckel (5) betätigbar ist.

2. Handschuhfach nach Anspruch 1, **dadurch gekennzeichnet, daß** die Vorrichtung (7) ein das zumindest eine Aufnahmeteil (9) aufnehmendes Gehäuse (10) aufweist, an dem die zumindest eine schwenkbare Klappe (12) drehbar angelenkt ist.

3. Handschuhfach nach Anspruch 1, **dadurch gekennzeichnet, daß** zwei getrennt voneinander betätigbare Aufnahmeteile (9) vorgesehen sind, wobei jedem Aufnahmeteil (9) vorzugsweise eine eigene Klappe (12) zugeordnet ist.

4. Handschuhfach nach einem der Ansprüche 1 bis 3, **dadurch gekennzeichnet, daß** jedes Aufnahmeteil (9) um eine seitlich außenliegende, etwa vertikal verlaufende Drehachse (18) am Gehäuse (10) gelagert ist, wobei das Aufnahmeteil (9) -in der Draufsicht gesehen - eine solche Form aufweist, daß sich die Getränkedose (8) in der Gebrauchslage (D) seitlich neben dem Entfaltungsbereich eines im Armaturenbrett angeordneten Beifahrerairbags (17) befindet.

5. Handschuhfach nach einem der Ansprüche 1 oder 2, **dadurch gekennzeichnet, daß** das Gehäuse (10) der Vorrichtung (7) an der Unterseite benachbart der Drehachse (13) der Klappe (12) eine nach oben ragende Ausformung (15) aufweist, in die ein oberer Rand (16) des Handschuhkastendeckels (5) in seiner Schließstellung (A) bereichsweise hineinragt.

## Claims

1. A glove compartment (3) for a dashboard (2) of a vehicle with a device (7) arranged in the upper region of the glove compartment (3) for holding beverage cans (8) or similar containers, wherein a pivotably mounted glove-compartment cover (5) is associated with the glove compartment (3), and the device (7) comprises at least one receiving part (9) for at least one beverage can (8), wherein the receiving part (9) is displaceable from a concealed rest position (C) inside the glove compartment (3) into a position of use (D) in front of the dashboard (2), **characterised in that** the glove-compartment cover (5) only extends approximately as far as the lower edge (11) of the device (7) and **in that** the device (7) comprises at least one separate flap (12) which has a low overall height and is actuatable separately from the glove-compartment cover (5).

2. A glove compartment according to claim 1, **characterised in that** the device (7) has a housing (10) which holds the at least one receiving part (9) and on which the at least one pivotable flap (12) is rotatably articulated.

3. A glove compartment according to claim 1, **characterised in that** two receiving parts (9) which are actuatable separately from one another are provided, wherein an individual flap (12) is preferably associated with each receiving part (9).

4. A glove compartment according to any one of claims 1 to 3, **characterised in that** each receiving part (9) is mounted on the housing (10) about a laterally outer, approximately vertically extending rotation axis (18), wherein the receiving part (9) - when seen in plan view - has a shape such that, in the position of use (D), the beverage can (8) is located laterally of the deployment region of a passenger air bag (17) arranged in the dashboard.

5. A glove compartment according to either one of claims 1 and 2, **characterised in that** the housing (10) of the device (7) has, on its underside adjacent to the rotation axis (13) of the flap (12), an upwardly extending recess (15), into which an upper edge (16) of the glove-compartment cover (5) partly projects in its closed position (A).

## Revendications

1. Boîte à gants (3) pour une planche de bord (2) d'un véhicule automobile, comportant un dispositif (7), agencé dans la partie supérieure de la boîte à gants (3) et destiné à maintenir des boîtes de boisson (8) ou récipients similaires, un couvercle (5) monté pivotant étant associé à la boîte à gants (3) et le dispositif (7) comportant au moins un logement (9) pour au moins une boîte de boisson (8), le logement (9) pouvant être déplacé à partir d'une position de repos (C), masquée à l'intérieur de la boîte à gants (3), vers une position d'utilisation (D) devant la planche de bord (2), **caractérisée en ce que** le couvercle (5) de la boîte à gants s'étend uniquement à peu près jusqu'au bord inférieur (11) du dispositif (7) et **en ce que** le dispositif (7) comporte au moins un rabat (12) séparé de faible hauteur d'encombrement, qui peut être actionné séparément du couvercle (5) de la boîte à gants.

2. Boîte à gants selon la revendication 1, **caractérisée en ce que** le dispositif (7) comporte le boîtier (10), qui reçoit au moins un logement (9) et sur lequel est articulé de manière rotative ledit au moins un rabat (12) pivotant.

3. Boîte à gants selon la revendication 1, **caractérisée en ce qu'**il est prévu deux logements (9) pouvant être actionnés séparément l'un de l'autre, chaque logement (9) comportant de préférence son propre rabat (12).

4. Boîte à gants selon l'une quelconque des revendications 1 à 3, **caractérisée en ce que** chaque logement (9) est monté sur le boîtier (10) autour d'un axe de rotation (18) sensiblement vertical, situé latéralement à l'extérieur, le logement (9) ayant - par référence à la vue en élévation - une forme telle que la boîte de boisson (8) dans la position d'utilisation (D) se situe latéralement à côté de la zone de déploiement d'un coussin gonflable pour passager (17) disposé dans la planche de bord.

5. Boîte à gants selon la revendication 1 ou 2, **caractérisée en ce que** le boîtier (10) du dispositif (7) comporte, sur la face inférieure à proximité de l'axe de rotation (13) du rabat (12), un évidement (15) orienté vers le haut, dans lequel s'engage par zones un bord supérieur (16) du couvercle (5) de la boîte à gants dans sa position de fermeture (A).
